# EUROPEAN PATENT APPLICATION

(11) **EP 2 216 977 A1**
(43) Date of publication of application: **11.08.2010**
(21) Application number: 09425042.0
(22) Date of filing: 09.02.2009
(51) Int. Cl.: H04M 11/02

(54) **Electronic remote porter and device**

(71) Applicant: Eporter S.r.l., 20124 Milano (MI) (IT)
(72) Inventor: Molteni, Jorio, 20124 Milano (MI) (IT); Bensaia, Luca, 20124 Milano (MI) (IT)
(74) Representative: Riccardi, Sergio

(57) **Abstract**

Electronic porter system, suitable for a condominium provided with a conventional door phone system, integrating the existing door phone system with digital data network routing and data/command transmission device, both communicating by a signal converting device (5) with said existing door phone system, thus allowing an external operator, connected to said routing device, for remotely managing both the calls of each owner-occupier and any visitor carrying them towards said operator against conversion performer by said device (5).

## Description

The present invention relates to an electronic porter system, and particularly a porter system manageable from a remote position by a human operator.

The conventional door phone systems currently used in condominiums are substantially constituted by a plurality of door phones, one for each flat inside the condominium, an optional control panel connected to each one of said door phones and installed in the porter's lodge and by one or more door phones installed outside condominium at the entry. Depending on cases, a conventional door phone system may or not provide a video-camera installed into the door phone outside the condominium and a monitor at each internal door phone, such that an owner-occupier or porter can check the visitor's identity. Such system provides as unique possibility to forward, in presence of the porter, a call to a single flat from the external door phone to the control panel in the porter's lodge, such that the porter, in place of the owner-occupier, can receive the visitor and eventually provide him with information for reaching the flat, or even can check the presence of the owner-occupier before providing the visitor with such information.

The electronic porter system according to the present invention, as it will be described in detail, provides the insertion within a conventional door phone system, just installed or to be *ex-novo* installed, of a digital door telephone interface that is a device adapted to convert the communication signals exchanged between the aforementioned door phone devices into telephone and digital signals, to address them through telephone and/or data network towards a proper operative station, *a priori* determined, and to establish a real digital communication session with said operative station, as well.

Therefore, main object of the present invention is to provide a device adapted not only to convert door phone signals into telephone signals, but also to establish a two-way digital communication in real time with a remote position, by using the existing telephone lines or data transfer lines.

Further object of the present invention is to provide a remote porter system provided with said two-way device for converting and transmitting door phone signals and able to provide utility, emergency and safety services for the owner-occupiers.

The device of the present invention is, however, suitable for existing door phone systems, whether they are analogue, currently still much common, or digital. Moreover, said device allows the conversion of door phone signals into digital signals that can be addressed either by telephone lines, both analogue (PSTN) and digital (ISDN), or by digital connections supporting TCP/IP (VoIP) protocol.

The remote porter system according to the present invention is therefore constituted besides by the aforementioned door phone apparatuses in each flat, and a possible central control panel within the porter's lodge and one or more door phone apparatuses at the entries, also by said two-way digital device for converting and transmitting signals and a suitable network device, that could be defined as a router, having both an USB port for receiving and transmitting digital data and analog telephone (PSTN) interfaces for transmitting vocal communications over VoIP protocol. In particular, the entry door phone apparatus is provided with a button for calling porter's lodge in the condominium; a pressing of said button generates an electric calling signal (call) at the central control panel of the porter's lodge to which the digital door telephone interface device is in parallel configuration connected, or in case of porter's panel lacking, to the same device which converts said signal in a digital signal automatically addressed by the network device throughout a data network towards an operative station wherein physically stands an operator assigned to receive calls in the considered condominium. From said operative station the operator is able to communicate with the visitor, which made a call by pressing the porter's lodge button, and to check his/her identity by the images provided by a video-camera placed at the entry door phone apparatus. Even from his/her position in the operative station, namely the remote porter's lodge, the operator can, while putting the visitor's call on hold, initiate a call with the owner-occupier the visitor is searching for, informing him/her about the presence of the identified person and thus checking the possibility for allowing the access into the condominium. Further, the operator is able to eventually report the visitor a message from the owner-occupier. The visitor could leave a message in a sort of condominium answering machine, by authorization of the owner-occupier.

In case in which the visitor is an employee or a technician of a company supplying services such as electricity, gas, water or the like, by the camera placed at the entry door phone apparatus, the operator can see the card thereof or an equivalent identification document, allow the access to the building, having preliminarily requested the type of the intervention, the duration thereof, and asking him/her to inform the operative station about the end thereof. Therefore any anomaly occurring in such procedure, once the technician is inside the condominium, is managed as a possible alarm. If the possible alarm is considered as such, an alarm management procedure is activated and comprises, if necessary, the involvement of the police.

*Vice versa,* if condominium anomalies or emergencies connected to services and home supplies occur, any owner-occupier can, either by its own door phone apparatus, if provided with a remote porter button, or calling a reserved number through a conventional phone line, contact the operator of the operative station which, in turn, once informed about the particular anomaly or emergency, contacts the personnel chosen by the management of the condominium for the managing of the particular verified emergency. With regard to such aspect, the system provides the possible installation of an additional specific apparatus, approved according to the 95/16/CE and EN 81-28 regulations, inside the lifting plant so as to manage even the emergencies connected to this service.

Further example of the services available by the system according to the present invention is the delivery and collection of packages or parcels by registered mail sent to an owner-occupier. It is, indeed, provided the possibility to displace, near the condominium supplied by the system, stations assigned for receipt of packages sent to owner-occupiers in case they are not in the flat at the delivery of the same packages. Therefore, the carrier even pressing the remote porter button could be informed by the operator about the absence of the owner-occupier and thus have instructions relative to the delivery of the packages to said station.

In the same manner, if inside the condominium there are offices of professional activities such as law firms, medical clinics, accounting firms, it will possible for them to make use of a virtual secretarial services able to provide for particularly complex office needs.

Finally, the remote porter system according to the present invention can serve as video-surveillance service. In the areas surrounding the condominium and also inside the condominium, typically in the hall and in the common areas of the condominium atrium, a set of video-cameras, each one connected to a digital recording apparatus (DVR) which allows storage of the images coming from each one of said set of video-cameras for a defined time period. The image video-recording occurs in a digital manner on the internal disk, able to storage normally continuously for seven or more days; it is possible to copy the images, stored on suitable removable units and kept them at the operative station; the recording can further be made either in continuous manner or in discontinuous manner, for example during time periods defined by the pressure of the door phone buttons for calling the porter's lodge or a single flat. The "Triplex" function of the DVR allows for simultaneously recording the images, sending them digitally to the operative station and making searches, locally or remotely, regarding recorded images.

Therefore, the video-surveillance service delivered by the system of the present invention allows the police, in a case in which any anomalous action or even worse a crime would occur in the under surveillance areas, for watching the recorded video thereof. Optionally, an integrated burglar alarm may also be installed thus offering the noticeable advantage of generating alarms managed directly from the operative station.

These and other advantages and features of the electronic porter system according to the present invention will became clear from reading the following detailed description, taken in reference with the annexed drawing, wherein:
Fig. 1 is a schematic view of a condominium provided with the electronic porter system according to the present invention, and
Fig. 2 is a functional diagram of a digital door telephone interface device according to the present invention.

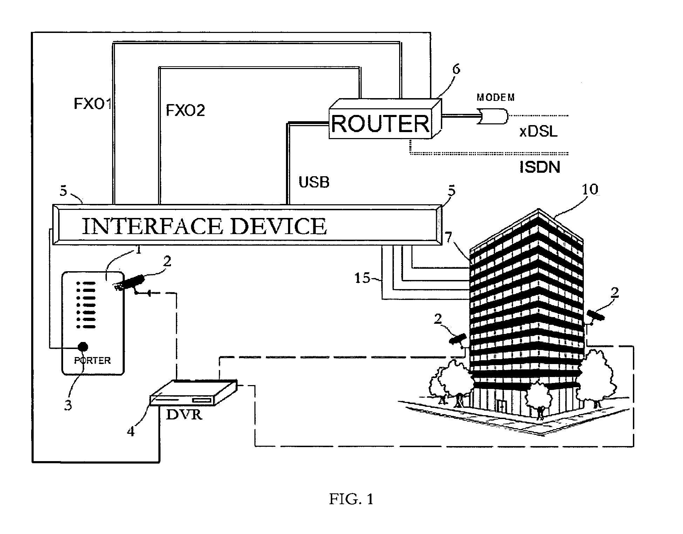

Referring now to fig. 1, in a condominium, initially provided with a conventional door phone system, there are added, at the entry, a door phone apparatus 1, a video-camera 2 and a porter's lodge button 3. Said video-camera 2 is connected, by suitable wirings, to a digital recording apparatus 4 (DVR). Moreover said DVR apparatus 4 can be connected to additional video-cameras 2 typically placed in the common places of said condominium. Said porter's lodge button 3 is instead connected by suitable wirings to the two-way digital door telephone interface device 5, whose function will be better explained in the following description.

Each flat of said condominium 10 is then provided with a door phone apparatus 7 being connected, by other wirings, to the same digital door telephone interface device 5, which, in turn, is connected to a suitable network apparatus 6, the router, to which also the DVR apparatus 4 can be connected.

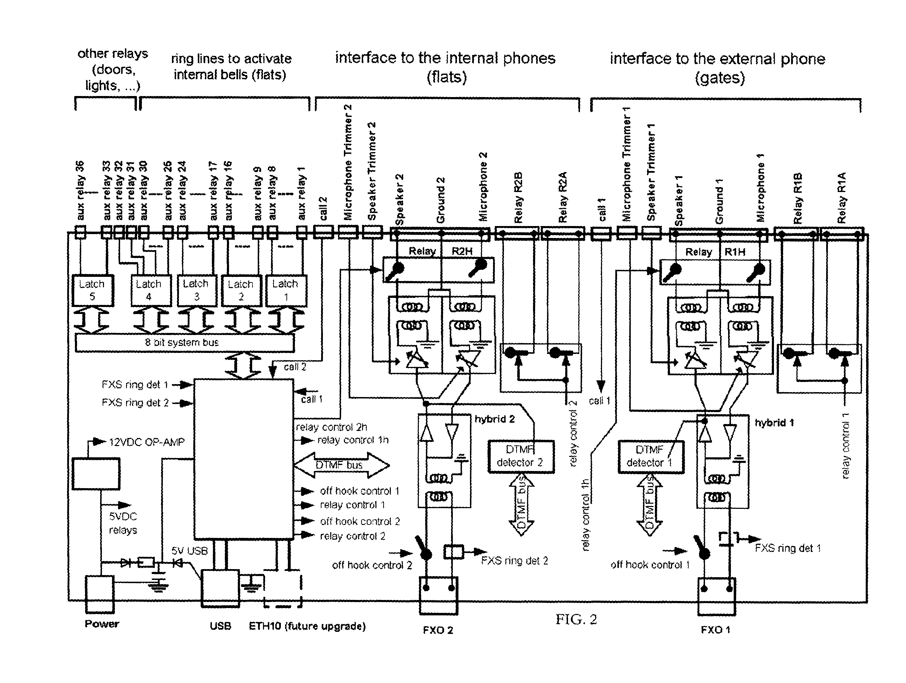

Turning now to fig. 2, the currently described embodiment has connections to said router 6:
- Analogue of telephone type by two FXO ports of the interface device 5;
- Digital, by an USB port, to the same interface device 5;
- Digital of LAN Ethernet type to the possible DVR apparatus 4 or the like;
- Digital, by an USB port, to the xDSL modem, if this connection type is provided, absolutely identical to an Internet connection; in alternative manner in respect of the preceding or as a back-up, digital by an ISDN interface within the same router, on proper Telecom ISDN local exchange.

In both connection types, xDSL or ISDN, the data exchanged with the control station are transmitted over TCP/IP protocol and the voice over proper VoIP protocol.

In particular, the digital door telephone interface device 5 has:
- A first audio connection line comprising Speaker1, Microphone1, and Ground1 ports for the entry door phone apparatus 1; optionally, a further door phone device for an operator physically present into the porter's lodge may be connected in parallel configuration to said first connection line: the latter configuration is not, however, in any way binding for the operation of all the other communication lines provided by the present invention;
- A second audio connection line comprising Speaker2, Microphone2, and Ground2 ports for the owner-occupier door phone apparatus 7;
- A first telephone out line FXO1 for connection to proper router 6 provided with VoIP interface;
- A first telephone out line FXO2 for connection to proper router 6 provided with VoIP interface;
- At least a digital converting circuit operating on signals transmitted between said first audio connection line and said first telephone line out, further provided with a DTMF signal digitization circuit in order to keep the converted signal routing unchanged;
- At least a digital converting circuit operating on signals transmitted between said second audio connection line and said second telephone line out, further provided with a DTMF signal digitization circuit in order to keep the converted signal routing unchanged;
- A plurality of relays, in fig. 1 indicated as aux-relay numbered from 1 to 30, having a normally-open circuit, that is an NO type, through which the operator can ring the bell of the door phone apparatus 7 of the owner-occupier searched by the visitor; if the owner-occupiers are more than thirty, more digital door telephone interface devices 5 according to the present invention are connected in parallel configuration in order to supply all the owner-occupiers covered by the service;
- A plurality of relays, in fig. 2 indicated as aux-relay numbered from 31 to 36, having a normally-open circuit, that is an NO type, through which the operator can remotely relays for opening doors and/or gates, turning on lights, activating/deactivating sensors and/or video-cameras;
- A pair of relays, R1A and R1B, having a normally-closed circuit, that is a NC type;
- A pair of relays, R2A and R2B, having a normally-closed circuit, that is a NC type;
- A third connection line comprising a line in Ring1 for the porter's lodge button 3;
- A fourth connection line comprising a line in Ring2 for the for the porter's lodge button of the owner-occupier door phone apparatuses 7, wholly analogous to the button 3.

The activation of the communication on said first audio connection line is determined by the pressing of the porter's lodge button 3 from visitor; at this time the digital door telephone interface device 5 converts the door phone signal of said first connection line into a telephone signal, and transmit it through said port FXO1 to the router 6, which will establish a communication through, for example, a xDSL line with an operator at the operative station. Together with the audio signal the operative station also receives the corresponding video signal coming from the video-camera 2 at the entry door phone apparatus 1 and passing through the DVR apparatus 4, or alternatively, if local recording of images is not requested, a conventional mono-camera VideoServer apparatus.

The two relays R1A and R1B serve to insulate the owner-occupier door phone apparatuses 7 when there is an active communication between the outer door phone position and the operative station.

Once the operator of said operative station has understood the visitor's intents, he/she could interrupt the communication established through said port FXO1 with the outer door phone position and starting a call with the owner-occupier searched by the visitor. At this time, the operator, using a software application embedded with the system, selects the request owner-occupier and starts the corresponding call by proper digital signal; the digital door phone interface device 5 receives through the USB or LAN Ethernet port from the router 6 said digital signal, decodes it and activate the corresponding relay, that is an aux-relay from 31 to 26; when the owner-occupier receives the call picks up the receiver of his/hers door phone apparatus 7, the digital door telephone interface device 5 establishes a communication through the port FXO2 between the same owner-occupier and the operator of the calling operative station; simultaneously, by means of the relays R2A and R2B, the device insulates the outer door phone position, such that the visitor cannot hear the communication with the owner-occupier.

Once received an answer from the owner-occupier, the operator hangs up thereto by deactivating the line FXO2; he/she reactivates the communication with the visitor through the line FXO1 and acts accordingly using the digital commands: opens the door/gate, turns the light on, activates/deactivates video-cameras by means of the six relays available (aux-relays 31 to 36) in case in which the owner-occupier accepts the visitor; or he/she lets the visitor leave and eventually he/she lets the visitor leave a vocal message in the proper condominium voice mail, if any provided.

If the already present condominium door phone system provides a call to a centralized door phone position (porter's lodge) an owner-occupier is able, by a suitable button onto his/hers own door phone apparatus 7 connected to the port Ring2 of the digital door telephone interface device 5, to call the operative station by using the just described communication line to present a request included in the utility services provided for the electronic system according to the present invention. For example, the owner-occupier could report a failure of some of the consumptions asking said operator for the intervention of a technician, for example among those provided by the management of the condominium, rather than give particular instructions in case a given visitor would arrive or in case of a determined package would be delivered thereto. If the existing door phone system does not provide a direct call to the porter, a reserved telephone number is available to the owner-occupier to contact the operator of the control station.

If the visitor of the condominium is a service operator such as post man, inspector of gas, electricity or water, cleaning staff, ecological operator, etc., the operator of the operative station, once verified the authenticity and trustworthiness thereof by visualizing, through the video-camera, the documents, will allow him/her the access by activating suitable commands for entering and turning on the lights, will check the permanence time and the exit time.

It is clear from the just provided description how the topology of the communication network, provided for the remote porter system according to the present invention, allows for making calls from and to all the users of the system, that is any visitor, any owner-occupier of said condominium and the operator of said operative station, which in turn could involve external suppliers, such as technicians of the consumptions in the flats and condominium, stations for shipping and delivering packages, police and any other service reachable through data and/or telephone network. Therefore the condominium, by using the 24h/24h and all the year continuous service provided by the operative station, could eliminate the expensive and notwithstanding incomplete local physic porter service, together with its not eliminable drawbacks, such as limited service time, the porter's absences due to holidays, illness and varying leaves and not the last the need of almost always provide lodgings into the condominium as porter apartment.

## Claims

1. A two-way digital converting device (5) particularly suitable for door phone signals comprising:
(i) At least two ports (FXO1, FXO2) adapted to the transmission of a telephone signal;
(ii) At least two port sets (Speaker1; Microphone1; Ground1, Speaker2; Microphone2; Ground2) adapted to the transmission of door phone signals;
(iii) At least one circuit converting said telephone signal into a door phone signal and vice versa, said converting circuit keeping the routing of said door phone or telephone converted signal unchanged;
(iv) At least one DTMF signal digitization circuit, operatively connected to said converting circuit;
(v) A plurality of relays commanded in order to generate calling door phone signals;

2. The converting device (5) according to claim 1, further comprising a pair of relays (R1A; R1B, R2A; R2B) inhibiting transfer of signals through each port set (Speaker1; Microphone1; Ground1, Speaker2; Microphone2; Ground2).

3. The converting device (5) according to claim 1, further comprising at least one relay commanded in order to generate actuation signals for servo-controls.

4. The converting device (5) according to claim 1, further comprising at least one port (USB, ETH10) for connection to a data network routing device (6).

5. Electronic porter system, particularly suitable for a condominium, comprising:
(i) At least one door phone apparatus (1) at the entry of said condominium;
(ii) At least one door phone apparatus (7) in each flato f said condominium;
(iii) At least one video-camera (2) next to said at least one door phone apparatus (1);
(iv) At least one data network routing device (6);
(v) At least one interfacing/recording system (4) for signals coming from said at least one video-camera (2), operatively connected to said at least one network device (6), and
(vi) At least a door telephone interface device operatively connected to said at least one entry door phone apparatus (1) and each door phone apparatus (7) in each flat, adapted to forward calling signals of said door phone apparatuses (1, 7) to a telephone apparatus corresponding to a remote operator and vice versa.

6. Electronic porter system according to claim 5, wherein said door telephone interface device is the converting device (5) according to claim 1.

7. Electronic porter system according to claim 6, wherein said telephone signals are analog.

8. Electronic porter system according to claim 6, wherein said telephone signals are digital.

9. Electronic porter system according to claim 6, wherein network device (6) is a router and/or switch.

10. Electronic porter system according to claim 6, wherein said interfacing system (4) is a VideoServer or a DVR and a monitor for visualizing the signal coming from said interfacing system (4) corresponds to said operator.
